Europäisches Patentamt

European Patent Office

Office européen des brevets

(19)

(11) Numéro de publication: **0 099 282**
**B1**

(45) Date de publication du fascicule du brevet:
09.04.86

(51) Int. Cl.⁴: **G 02 F 1/03**, G 02 F 1/21

(21) Numéro de dépôt: 83401190.0

(22) Date de dépôt: 10.06.83

(54) Dispositif optique intégré modulateur indépendant de la polarisation incidente.

(30) Priorité: 22.06.82 FR 8210902

(43) Date de publication de la demande:
25.01.84 Bulletin 84/4

(45) Mention de la délivrance du brevet:
09.04.86 Bulletin 86/15

(84) Etats contractants désignés:
**DE GB IT NL SE**

(56) Documents cités:
**EP - A - 0 017 571**
**FR - A - 2 406 219**
**US - A - 4 243 295**
**US - A - 4 262 993**
**US - A - 4 291 939**

**IEEE JOURNAL OF QUANTUM ELECTRONICS, vol. QE-18, no. 3, mars 1982, pages 393-398, New York, USA, D. MARCUSE et al.: "Optimal electrode design for integrated optics modulators"**

(73) Titulaire: **THOMSON-CSF, 173, Boulevard Haussmann, F-75379 Paris Cedex 08 (FR)**

(72) Inventeur: **Papuchon, Michel, THOMSON-CSF
SCPI 173, bld Haussmann, F-75379 Paris Cedex 08 (FR)**
Inventeur: **Bourbin, Yannic, THOMSON-CSF
SCPI 173, bld Haussmann, F-75379 Paris Cedex 08 (FR)**

## 0 099 282

**Description**

La présente invention concerne un dispositif optique intégré modulateur d'intensité lumineuse.

L'utilisation de l'effet électro-optique, mis en évidence notamment dans les matériaux ferroélectriques, a permis de réaliser des modulateurs de lumière, selon des formes de réalisation diverses compatibles avec les techniques d'intégration selon lesquelles des guides d'onde optique sont obtenus dans un substrat d'indice $n_o$ en y créant des zones où l'indice de réfraction est supérieur à $n_o$. L'un de ces modes de réalisation consiste en un interféromètre à deux bras dans lequel on crée, par effet électro-optique, une différence de vitesse de propagation dans les deux bras, produisant un déphasage commandé électriquement entre les ondes issues des deux bras.

L'intensité lumineuse émergente varie avec le déphasage et est donc modulée par la tension analogique de commande qui induit l'effet électro-optique. La réponse d'un tel modulateur est sinusoïdale mais peut être linéarisée en ajoutant une boucle de rétro-action opto-électronique. Un tel dispositif est décrit dans EP-A-0 017 571.

Mais en général, les substrats actifs utilisés en optique intégrée sont des matériaux anisotropes et biréfringents. Ceci signifie que leurs propriétés sont différentes suivant les caractéristiques de l'onde lumineuse qui s'y propage, telles que sa direction de propagation, et sa polarisation.

Pour les modulateurs optiques intégrés utilisant l'effet électro-optique, généralement, l'onde polarisée TE et l'onde polarisée TM ne subiront pas les mêmes déphasages et donc, les propriétés du modulateur seront différentes selon la polarisation incidente. Une façon de surmonter cet inconvénient et donc de réaliser un modulateur indépendant de la polarisation est d'utiliser deux configurations d'électrodes différentes permettant de bénéficier de coefficients électro-optiques différents: l'un pour l'onde TE et l'autre pour l'onde TM (US-A-4 262 993).

En agissant indépendamment sur chaque électrode on peut donc régler séparément les déphasages pour les ondes polarisées TE et TM. Mais cette solution est complexe puisqu'elle nécessite plusieurs systèmes d'électrodes et donc des connexions et des réglages multiples.

Pour pallier ces inconvénients le dispositif de l'invention n'utilise qu'un seul système d'électrodes dont la position est choisie pour égaliser les effets sur les ondes polarisées TE et TM.

L'invention a pour objet un dispositif optique intégré modulateur de phase comprenant à la surface d'un substrat plan possédant des propriétés électro-optiques, au moins un guide d'onde réalisé par création d'une zone dans laquelle l'indice de réfraction est supérieur à celui du substrat, un premier mode guidé TE et un second mode guidé TM étant transmis dans ce guide d'onde à des profondeurs h et h' par rapport à la surface du substrat, et un jeu d'électrodes disposées de part et d'autre de ce guide d'onde pour provoquer des champs électriques perpendiculaires à la direction du guide d'onde, ces électrodes pouvant recouvrir partiellement ce guide d'onde, ce jeu d'électrodes permettant de régler les déphasages des modes guidés TE et TM d'une manière que les déphasages de ces deux modes sont égaux, ces modes TE et TM ayant des rayons W'y et Wy, et W'z et Wz suivant deux axes perpendiculaires dans un plan orthogonal à la direction du guide d'onde, l'un de ces axes étant parallèle à la surface du substrat, caractérisé en ce que ce jeu d'électrodes comporte un couple unique de deux électrodes de formes rectangulaires de largeur b parallèles entre elles et disposées à la surface du substrat symétriquement par rapport à un axe $\Delta'$ de direction parallèle à celle du guide d'onde, écartées d'une distance 2a l'une de l'autre, les deux modes TE et TM transmis ayant leurs axes de symétrie $\Delta_1$ et $\Delta_2$ dont les projections sur la surface du substrat sont respectivement à des distances c' et c de l'axe $\Delta'$, et en ce que les quantités a, b, c, c', h, h', Wy, W'y, Wz et W'z sont telles que la relation $\Delta n_{TE} = \Delta n_{TM}$ soit vérifiée, $\Delta n_{TE}$ et $\Delta n_{TM}$ étant des variations d'indices transversales dans le substrat correspondant aux deux modes guidés TE et TM.

Les caractéristiques et avantages de l'invention apparaîtront mieux à l'aide de la description ci-après et des figures annexées parmi lesquelles:
— les figures 1 et 2 représentent deux types de modulateurs optiques de l'art connu;
— la figure 3 est un diagramme illustrant le fonctionnement des modulateurs des figures 1 et 2;
— la figure 4 représente un autre type de dispositif de l'art connu;
— la figure 5 représente le dispositif de l'invention;
— la figure 6 est un diagramme illustrant la réalisation du dispositif de l'invention.

Dans la description on considérera tout d'abord différents dispositifs de l'art connu pour bien définir le domaine du dispositif de l'invention qui peut être un modulateur de phase ou un modulateur d'amplitude: un modulateur d'amplitude peut regrouper par exemple deux modulateurs de phase. Les dispositifs de l'art antérieur considérés sont donc, tout d'abord, deux modulateurs d'amplitude afin de mieux cerner le domaine de l'invention puis un modulateur de phase indépendant de la polarisation incidente.

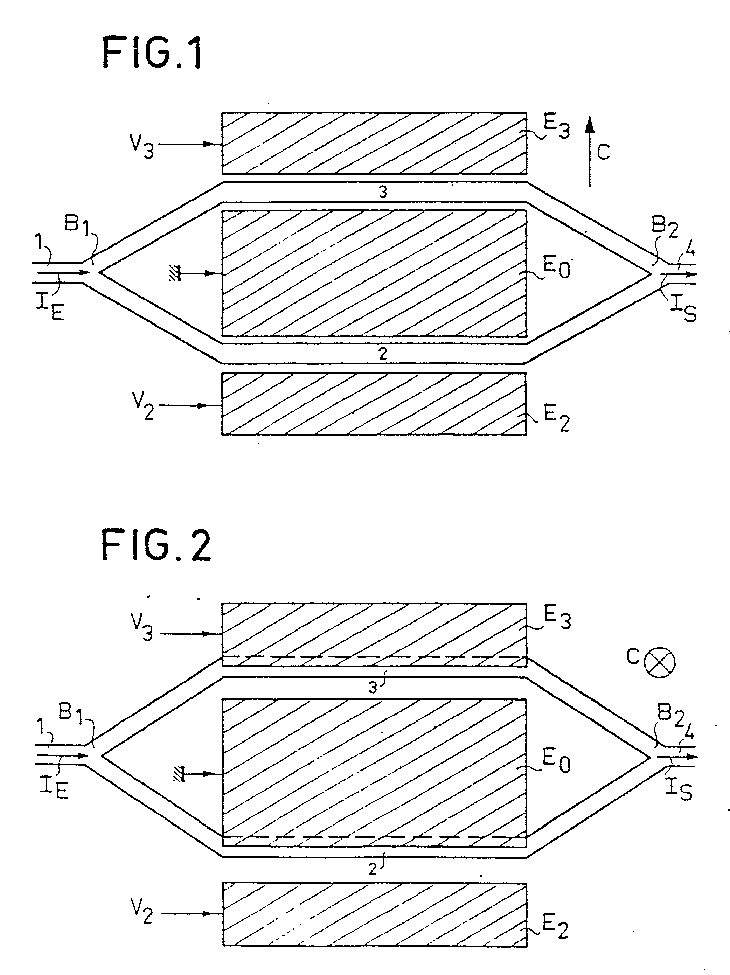

On peut voir sur la figure 1 le schéma d'un interféromètre à deux bras permettant de moduler l'intensité lumineuse $I_E$. Cet interféromètre comprend une branche de guide d'onde d'entrée I monomode dans laquelle est couplée une onde lumineuse d'intensité $I_E$. Cette branche 1 se sépare à la bifurcation $B_1$ en deux bras parallèles 2 et 3 constituant des guides monomodes, qui se rejoignent en une bifurcation $B_2$ pour former une branche de guide d'onde de sortie monomode 4 où l'on peut récupérer une intensité $I_S$. Les directions de propagation dans les quatre guides sont les mêmes. En réalité cet interféromètre à deux bras possède deux sorties. En effet quand les signaux sont en opposition de phase, la lumière se propage à l'intérieur du substrat; ce qui revient à exciter le mode supérieur qui ne se propage pas dans le guide mais qui fuit dans le substrat. Des électrodes sont disposées de part et d'autre de chacun des guides 2 et 3, par exemple une électrode centrale $E_0$, une électrode $E_2$ de l'autre côté du bras 2 et à laquelle on applique une tension $V_2$ et une électrode $E_3$ de l'autre côté du bras 3 à laquelle on

applique une tension $V_3$, l'électrode $E_0$ étant reliée à la masse. La disposition des électrodes telle que représentée sur la figure 1, c'est à dire ne recouvrant pas les guides mais leur étant adjacents, provoque dans chacun des guides 2 et 3 des champ électriques perpendiculaires à la direction de propagation des ondes lumineuses et dans le plan de la figure. Dans ce cas, le mode de propagation utilisé dans les guides est un mode TE. L'ensemble du dispositif est réalisé à la surface d'un substrat possédant des propriétés électro-optiques, tel que le niobate de lithium ($LiNbO_3$), le tantalate de lithium ($LiTaO_3$) ou l'arséniure de gallium (GaAs). Dans un substrat de niobate de lithium par exemple, les guides d'onde optique sont obtenus par diffusion de titane. Cette diffusion est sélective grâce à des procédés de photolithographie classique. Dans le cas de la figure 1 où les champs électiques appliqués aux guides sont dans le plan de la figure, il est préférable que l'axe C, ou axe qui porte l'indice extraordinaire du niobate de lithium soit également dans ce plan et perpendiculaire à la direction de propagation commune aux guides 1 à 4, de façon à présenter l'effet électro-optique maximal. Si les tensions $V_2$ et $V_3$ sont de même signe, les champs provoquent des variations dans les vitesses de propagation des ondes lumineuses pour chacun des deux guides: la tension $V_3$ provoque une variation en sens inverse — $\Delta\beta_2$ qui lui est également proportionnelle. Ces variations de vitesse provoquent à l'emplacement de la bifurcation $B_2$ un déphasage entre les deux ondes issues des guides 2 et 3 qui se trouvaient primitivement en phase à la bifurcation $B_1$. Ce déphasage $\Delta\Phi'$ est égal à $\Delta\beta_3L_3 + \Delta\beta_2L_2$ où $L_2$ et $L_3$ sont les longueurs des électrodes comprises entre les deux bifurcations $B_1$ et $B_2$. En général $L_2=L_3=L$, si bien que $\Delta\Phi'=(\Delta\beta_3+\Delta\beta_2)L$. Bien entendu, l'une des deux tension $V_2$ ou $V_3$ peut être nulle, si bien que seule la variation $\Delta\beta_3$ ou $\Delta\beta_2$ intervient. On peut mettre l'expression du déphasage $\Delta\Phi'$ sous la forme $\dfrac{\pi (V_3 + V_2)}{V\pi}$ où $V\pi$ est la somme des tensions qui provoquent un déphasage $\Delta\Phi'$ égal à $\pi$. Les ondes lumineuses récupérées dans le guide 4 résultent de la combinaison des ondes issues des guides 2 et 3 arrivant dans la bifurcation $B_2$ c'est à dire deux ondes d'intensité $\alpha \dfrac{I_E}{2}$ déphasées l'une par rapport à l'autre de $\Delta\Phi'$. On peut donc écrire l'intensité résultante $I_S$ sous la forme $\alpha \dfrac{I_E}{2} (1+M\cos \Delta\Phi')=\alpha \dfrac{I_E}{2} \left[ 1 + M\cos \dfrac{\pi (V_3 + V_2)}{V_\pi} \right]$ où $\alpha$ et M sont des constantes qui dépendent des pertes de couplage et de la dissymétrie de l'interféromètre. On aboutit à un résultat semblable avec une seule paire d'électrodes par exemple $E_0$ et $E_3$. Dans ce cas $\Delta\beta_2=0$ et

$$I_S = \alpha \frac{I_E}{2} (1 + M\cos \frac{\pi V_3}{V_\pi} ).$$

La figure 2 représente elle aussi le schéma d'un interféromètre à deux bras. Mais cette fois ci les électrodes $E_3$ et $E_0$ sont déposées à la surface du substrat au-dessus des deux guides 2 et 3. La disposition de ces électrodes provoque dans chacun de ces guides 2 et 3 des champs perpendiculaires à la propagation des ondes lumineuses, et perpendiculaires au plan de la figure. Il est préférable alors que l'axe C du niobate de lithium soit également perpendiculaire à la direction de propagation commune aux guides 1 à 4, et perpendiculaire au plan de la figure. Dans ce cas, le mode de propagation utilisé dans les guides est un mode TM.

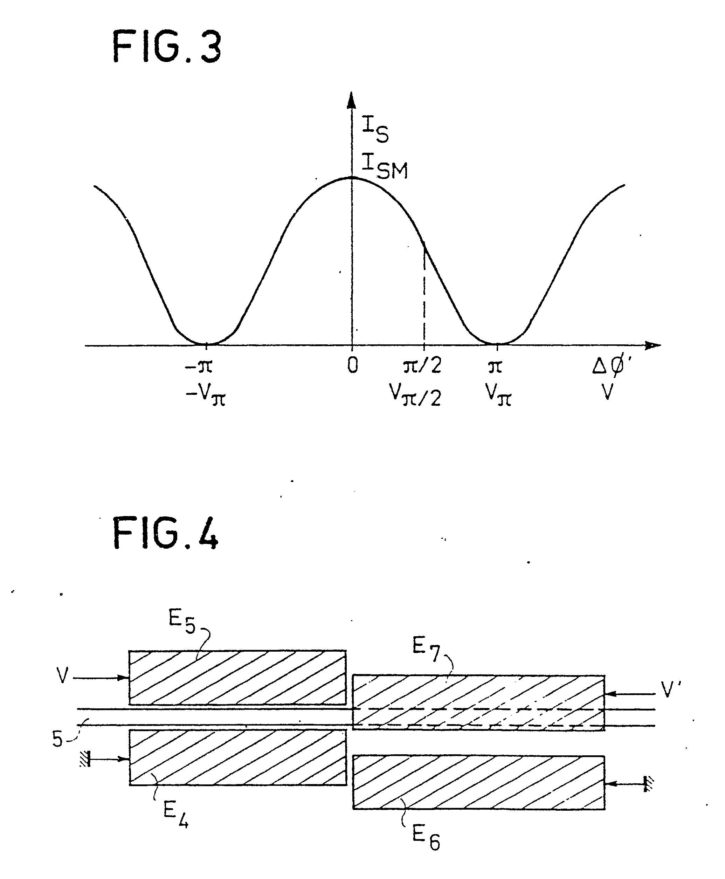

La figure 3 est la courbe représentative de l'intensité émergente $I_S$ relative aux deux types d'interféromètre représentés aix figures 1 et 2, en fonction du déphasage $\Delta\Phi'$ existant à l'emplacement de la bifurcation $B_2$, ou de la tension V égale à la tension (ou à la somme des tensions) appliquée à l'une au moins des électrodes $E_2$ et $E_3$, prise avec son (leur) signe par rapport à la masse. Lorsque V est nul, l'intensité de sortie $I_S$ est maximale et vaut $I_{SM}$. Lorsque la valeur absolue de V augmente, l'intensité lumineuse $I_S$ diminue et la valeur minimale $I_m$ est obtenue par $V=V\pi$, cette valeur $I_m$ est théoriquement nulle comme représentée sur la figure 3. Au voisinage de $\dfrac{V_\pi}{2}$, la variation de $I_S$ peut être considérée, au premier ordre, comme linéaire en fonction de $\Delta\Phi'$ ou de V. Toutefois le taux d'harmoniques de la variation de $I_S$ en fonction de $V-\dfrac{V_\pi}{2}$ croit très rapidement lorsqu'on s'éloigne de $\dfrac{V_\pi}{2}$.

Il est également possible de scinder en deux parties les électrodes 2 et 3. Une partie de la longueur de chaque bras de l'interféromètre peut être aussi soumise à un champ modulant provenant d'une première tension $V_M$ tandis que l'autre partie est soumise à un champ modulant provenant d'une deuxième tension $V_R$.

Le fait d'appliquer des champs électriques de même intensité et de sens opposés aux deux bras 2 et 3 de l'interféromètre permet d'augmenter la sensibilité du modulateur, c'est à dire de diminuer les tensions modulantes nécessaires pour obtenir un déphasage donné.

Mais l'invention concerne plus particulièrement un dispositif modulateur optique intégré dont le fonctionnement est indépendant de la polarisation incidente. Ce modulateur, qui repose sur l'effet électro-optique dans des guides d'ondes obtenus, par exemple, dans du niobate de lithium ($LiNbO_3$) présente un grand intérêt toutes les fois où l'onde incidente ne présente pas un état de polarisation bien défini. En particulier il peut être utilisé conjointement à des fibres monomodes d'entrée et de sortie standards dans lesquelles on sait qu'un état de polarisation incident peut se transformer en un autre état à la sortie de la fibre. De plus, ce dernier peut évoluer dans le temps avec un certain nombre de paramètres tels que, par exemple, la templèrature, la courbure de la fibre...

En général, les substrats actifs utilisés en optique intégrée sont des matériaux anisotropes et biréfringents. Ceci signifie, en général, que leurs propriétés sont différentes suivant les caractéristiques de l'onde lumineuse qui s'y propage, telles que sa direction de propagation, et sa polarisation. Ces remarques sont particulièrement vraies pour les modulateurs optique intégrés utilisant l'effet électro-optique: en général, l'onde polarisée transverse électrique ou "TE" et l'onde polarisée transverse magnétique ou "TM", ne subiront pas les mêmes déphasages et donc, les propriétés du modulateur seront différentes selon la polarisation incidente. Une façon de surmonter cet incovénient est donc de réaliser un modulateur indépendant de la polarisation et d'utiliser deux configurations d'électrodes différentes permettant de bénéficier de coefficients électro-optiques différents: l'un pour l'onde TE et l'autre pour l'onde TM.

En agissant indépendamment sur chaque électrode on peut donc régler séparément les déphasages pour les onde polarisées TE et TM. Cette solution est relativement complexe puisqu'elle nécessite plusieurs systèmes d'électrodes et donc des connexions et des réglages multiples comme représenté à la figure 4. Ainsi le dispositif représenté à la figure 4 est un modulateur de phase. Il comporte un guide d'onde intégré 5 et deux couples de deux électrodes: les électrodes $E_4$ et $E_5$ permettant de régler le déphasage de l'onde polarisé transverse électrique ou "TE" et les électrodes $E_6$ et $E_7$ permettant de régler le déphasage de l'onde polarisée transverse magnétique ou "TM". En effet pour un couple donné d'électrodes $E_4$ et $E_5$, associées à une tension V, il est possible de trouver un autre couple d'électrodes $E_6$ et $E_7$ associées à une tension V' qui permette de ramener la polarisation de l'onde lumineuse comme elle était à l'entrée du circuit.

Contrairement à ce dispositif de l'art antérieur le dispositif de l'invention n'utilise qu'un seul système d'électrodes dont la position est choisie pour égaliser les effets sur les ondes polarisées TE et TM.

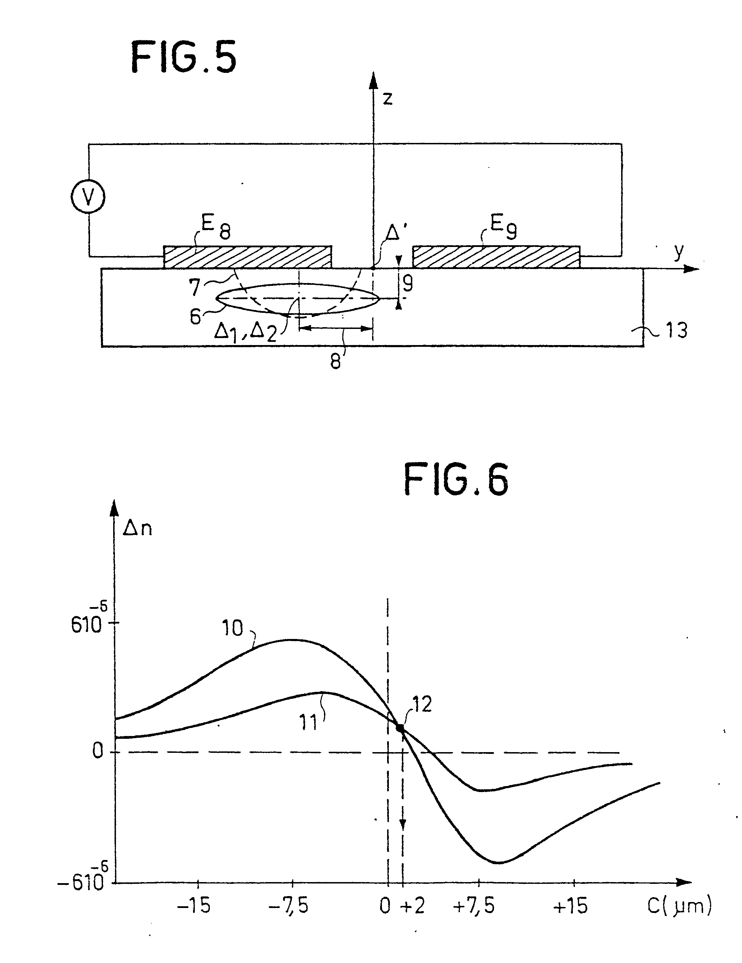

L'invention repose sur le principe de base schématisé sur la figure 5 où on a représenté en coupe un guide d'onde 7 muni d'électrodes $E_8$ et $E_9$, ces électrodes étant coplanaires. Le champ électrique dans une telle structure est inhomogène et possède des composantes Ez et Ey dépendant chacune de z et y. Un mode guidé transmis 6 a son coeur situé à une distance 8 du milieu des électrodes et une distance 9 de la surface du substrat soient c' et c cette distance 8 pour respectivement les modes TE et TM, et h' et h cette distance 9 pour ces mêmes modes TE et TM. En effet ces deux modes ne sont pas forcément centrés au même endroit. Soient $\Delta_1$ et $\Delta_2$ leurs axes de symétrie. Sur la figure 5 on a supposé qu'ils étaient centrés au même endroit. Les deux axes $\Delta_1$ et $\Delta_2$ sont donc confondus. Soit 2a la distance interélectrodes et b la largeur de ces électrodes $E_8$ et $E_9$; l'axe de symétrie de ces électrodes étant l'axe $\Delta'$. $\varepsilon$ z et $\varepsilon$ y sont les éléments tenseurs diélectriques en z et y.

On applique donc une différence de potentiel V aux bornes de ces électrodes $E_8$ et $E_9$.

Si on considère que T(z,y) et T'(z,y) sont les répartitions transversales des champs électriques des modes guidés TM et TE, on peut montrer que tout se passe comme si on devait considérer l'action de champs électriques "équivalents moyens" donnés par:

$$\mathscr{E}z = \frac{\iint_{-\infty}^{+\infty} Ez\, T(z,y)\, T^*(z,y)\, dz\, dy}{\iint_{-\infty}^{+\infty} T(z,y)\, T^*(z,y)\, dz\, dy} \qquad \mathscr{E}y = \frac{\iint_{-\infty}^{+\infty} Ey\, T(z,y)\, T^*(z,y)\, dz\, dy}{\iint_{-\infty}^{+\infty} T(z,y)\, T^*(z,y)\, dz\, dy}$$

et des expressions équivalentes $\xi'z$ et $\xi'y$ pour T' (z,y) —

T* est la valeur conjuguée de T.

Les valeurs des champs électriques Ez et Ey sont donnés par les relations:

$$Ez = -\frac{\partial W}{\partial z} = -\frac{V_2-V_1}{2a\, J_1(K)} \sqrt{\frac{\varepsilon z}{\varepsilon y}}\ R_e \left[ \frac{i}{\left\{ \left[ 1 - \left(\frac{y}{a} + \frac{iz}{a}\sqrt{\frac{\varepsilon z}{\varepsilon y}}\right)^2 \right]\left[ 1 - K^2 \frac{y}{a} + \frac{iz}{a}\sqrt{\frac{\varepsilon z}{\varepsilon y}} \right] \right\}^{\frac{1}{2}}} \right]$$

$$Ey = -\frac{\partial W}{\partial y} = -\frac{V_2-V_1}{2a\, J_1(K)}\ R_e \left[ \frac{1}{\left\{ \left[ 1 - \left(\frac{y}{a} + \frac{iz}{a}\sqrt{\frac{\varepsilon z}{\varepsilon y}}\right)^2 \right]\left[ 1 - K^2 \frac{y}{a} + \frac{iz}{a}\sqrt{\frac{\varepsilon z}{\varepsilon y}}^2 \right] \right\}^{\frac{1}{2}}} \right]$$

$R_e$ étant la partie réelle de l'expression entre crochets [...].

L'effet électro-optique résultant est alors décrit classiquement par des variations transversales d'indice $\Delta n$ créée par effet électro-optique du type:

$\Delta n \propto d\xi$

d étant le coefficient électro-optique correspondant à la variation d'indice recherchée et au champ $\xi$. On conçoit alors que, pour un cristal donné, on puisse trouver une position des électrodes particulières avec lesquelles on ait:

$\Delta n_{TE} = \Delta n_{TM}$

Si on considère le cas du niobate de lithium (LiNbO$_3$) orienté comme dans la figure 1, avec les coefficients électro-optiques correspondants on a:

$$\Delta n_{TM} = \frac{n_e^3}{2}\, \Gamma zzz\, \mathscr{E}z \qquad \Delta n_{TE} = \frac{n_o^3}{2} \left[ \Gamma yyz\, \mathscr{E}'z + \Gamma yyy\, \mathscr{E}'y \right]$$

En supposant que les répartitions transversales des modes TE et TM sont données par des signaux gaussiens:

$$\text{pour l'onde TM : } T(z,y) \propto e^{-\left(\frac{z^2}{W_z^2} + \frac{y^2}{W_y^2}\right)}$$

$$\text{pour l'onde TE : } T'(z,y) \propto e^{-\left(\frac{z^2}{W_z^2} + \frac{y^2}{W_y^2}\right)}$$

On peut alors calculer $\Delta n_{TM}$ et $\Delta n_{TE}$ en fonciton des paramètres de la structure souhaitée tels que notamment l'espace interélectrodes, la position des électrodes, la position des modes transmis par rapport à la surface du substrat.

Ainsi pour déterminer $\Delta n_{TE}$ et $\Delta n_{TM}$ on recherche tout d'abord la valeur des champs électriques en fonction de la largeur des électrodes et de la distance entre celles-ci, puis celui de la répartition transversale des ondes guidées TE et TM et celui des champs électriques moyens $\xi y$ et $\xi z$ pour ces deux types d'onde en fonction de la position des modes. Et alors on peut trouver une solution répondant à l'équation $\Delta n_{TE} = \Delta n_{TM}$ permettant de positionner les électrodes $E_8$ et $E_9$ par rapport au mode guidé.

Il y a plusieurs paramètres sur lesquels on peut jour: largeur des électrodes b, espacement de ces électrodes 2a, profondeur des modes TE et TM: h' et h, et décalage de ceux-ci par rapport au milieu des électrodes: c' et c. Il y a aussi la forme des modes TE et TM transmis: W'z et Wz étant les rayons de ces modes selon Oz et W'y et Wy selon Oy. Il est possible, en fixant n-1 parmi ces n paramètres de jouer sur le dernier. Ainsi à titre d'exemple on peut jouer sur la profondeur c.

Une possibilité pour résoudre cette équation est d'utiliser une résolution graphique telle que représentée à la figure 6, W et W' étant les rayons des modes.

On a considéré à titre d'exemple non limitatif
Wz = W'z = 4 micromètres
Wy = W'y = 5 micromètres
h = h' = 4 micromètres
2a = 4 micromètres
b = 5 micromètres
pour une différence de potentiel V = 1 Volt.

Sur la figure 6 la courbe 10 représente $\Delta n_{TM}$ = f(c) et la courbe 11 représente $\Delta n_{TE}$ = f(c).

On donc $\Delta n_{TE} = \Delta n_{TM}$ pour c = c' = 2 micromètres.

La figure 6 donne donc un exemple où les paramètres utilisés sont précisés. On voit qu'il existe une position des électrodes par rapport aux modes guidés où $\Delta n_{TE} = \Delta n_{TM}$, c'est à dire qu'on a réalisé on modulateur électro-optique indépendant de la polarisation de la lumière incidente.

Avec un seul système d'électrodes et en choisissant la position de celles-ci par rapport au guide d'onde, on peut donc réaliser une structure simple conduisant à un circuit actif optique intégré indépendant de la polarisation.

Le dispositif de l'invention est donc un modulateur de phase indépendant de la polarisation incidente qui ne comporte contrairement au modulateur illustré à la figure 4, plus qu'un couple d'électrodes $E_4$ et $E_5$ par exemple.

Il est alors possible d'obtenir un circuit complexe indépendant de la polarisation en combinant plusieurs dispositifs de l'invention: Ainsi en regroupant deux modulateurs de phase, comme à la figure 1, on peut réaliser alors un modulateur d'amplitude indépendant lui aussi de la polarisation incidente.

Le dispositif de l'invention peut être réalisé aussi à la surface d'un autre substrat que le niobate de lithium possédant des propriétés électro-optiques, tel que, par exemple, le tantalate de lithium ($LiTaO_3$) ou l'arséniure de gallium (GaAs). Les relations donnant $\Delta n_{TE}$ et $\Delta n_{TM}$ sont alors différentes.

Le dispositif de l'invention peut être utilisé dans tous les circuits comportant un modulateur de phase. Il a été considéré dans les calculs avec une structure monomode, mais une structure multimode est parfaitement envisageable.

De tels principe peuvent être appliqués avantageusement dans tous les cas où une fibre monomode standard est utilisée et en particulier dans les télécommunications optiques.

## Revendications

1. Dispositif optique intégré modulateur de phase comprenant à la surface d'un substrat plan (13) possédant des propriétés électro-optiques au moins un guide d'onde réalisé par création d'une zone (7) dans laquelle l'indice de réfraction est supérieur à celui du substrat, un premier mode guidé TE et un second mode guidé TM étant transmis dans ce guide d'onde (7) à des profondeurs h et h' par rapport à la surface du substrat (13), et un jeu d'électrodes disposées de part et d'autre de ce guide d'onde (7) pour provoquer des champs électriques perpendiculaires à la direction du guide d'onde (7), ces électrodes pouvant recouvrir partiellement ce guide d'onde (7), ce jeu d'électrodes permettant de régler les déphasages des modes guidés TE et TM d'une manière que les déphasages de ces deux modes sont égaux, ces modes TE et TM ayant des rayons W'y et Wy, et W'z et Wz suivant deux axes perpendiculaires dans un plan orthogonal à la direction du guide d'onde (7), l'un de ces axes étant parallèle à la surface du substrat (13), caractérisé en ce que ce jeu d'électrodes comporte un couple unique de deux électrodes ($E_8$, $E_9$) de formes rectangulaires de largeur b parallèles entre elles et disposées à la surface du substrat symétriquement par rapport à un axe $\Delta'$ de direction parallèle à celle du guide d'onde (7), écartées d'une distance 2a l'une de l'autre, les deux modes TE et TM transmis ayant leurs axes de symétrie $\Delta_1$ et $\Delta_2$ dont les projections sur la surface du substrat (13) sont respectivement à des distances c' et c de l'axe $\Delta'$, et en ce que les quantités a, b, c, c', h, h', Wy, W'y, Wz et W'z sont telles que la relation $\Delta n_{TE} = \Delta n_{TM}$ soit vérifiée, $\Delta n_{TE}$ et $\Delta n_{TM}$ étant des variations d'indices transversales dans le substrat correspondant aux deux modes guidés TE et TM.

2. Dispositif selon la revendication 1, caractérisé en ce que le substrat (13) est en niobate de lithium possédant un axe c qui porte l'indice extra-ordinaire, le guide d'onde étant obtenu par diffusion localisée de titane.

3. Dispositif selon la revendication 2, caractérisé en ce que le substrat (13) est orienté de façon que son axe c soit parallèle aux champs électriques créés dans les guides.

4. Dispositif suivant la revendication 1, caractérisé en ce que le substrat (13) est en tantalate de lithium.

5. Dispositif suivant la revendication 1, caractérisé en ce que le substrat (13) est en Arséniure de Gallium.

6. Dispositif optique intégré modulateur d'amplitude comprenant un interféromètre à deux bras reliés à un guide d'entrée recevant un rayonnement optique incident, les fractions de rayonnement propagées dans ces deux bras se combinant à la sortie de l'interféromètre dans un guide de sortie, l'intensité du rayonnement émergeant étant fonction du déphasage introduit par un champ électrique modulant appliquée à au moins l'un des bras, caractérisé en ce gu'au moins l'un des bras comporte un dispositif optique intégré modulateur de phase selon l'une quelconque des revendications 1 à 5.


## Patentansprüche

1. Integrierte optische Phasenmodulationsvorrichtung, die an der Oberfläche eines ebenen, elektrooptische Eigenschaften aufweisenden Substrats (13) mindestens einen Wellenleiter aufweist, der durch Erzeugung einer Zone (7), in der der Brechungsindex größer als der des Substrats ist, realisiert ist, wobei ein erster Wellenmodus TE und ein zweiter Wellenmodus TM in diesem Wellenleiter in Tiefen h und h' bezüglich der Substratoberfläche (13) übertragen wird, und wobei ein Satz von zu beiden Seiten dieses Wellenleiters (7) angeordneten Elektroden vorgesehen ist, um elektrische Felder senkrecht zur Richtung des Wellenleiters (7) hervorzurufen, wobei diese Elektroden den Wellenleiter (7) teilweise überdecken können und der Satz von Elektroden die Phasenverschiebungen der Wellenmoden TE und TM so zu regeln vermag, daß die Phasenverschiebungen dieser beiden Moden gleich sind und diese Moden TE und TM Radien W'y und WY, sowie W'z und Wz in Richtung zweier Achsen besitzen, die senkrecht zur Richtung des Wellenleiters (7) in einer senkrechten Ebene liegen, und wobei eine dieser Achsen parallel zur Substratoberfläche (13) verläuft, dadurch gekennzeichnet, daß der Elektrodensatz ein einziges Paar von zwei Elektroden ($E_8$, $E_9$) von Rechteckform mit einer Breite b aufweist, die zueinander parallel in einem Abstand 2a voneinander auf der Oberfläche des Substrats symmetrisch bezüglich einer Achse $\Delta'$ liegen, die parallel zu der des Wellenleiters (7) verläuft, wobei die Projektionen der Symmetrieachsen $\Delta_1$ und $\Delta_2$ der beiden übertragenen Wellenmoden TE und TM auf die Oberfläche des Substrats (13) Abstände c' bzw. c von der Achse $\Delta'$ besitzen, und daß die Größen a, b, c, c', h, h', Wy, W'y, Wz und W'z so gewählt sind, daß die Gleichung $\Delta n_{TE} = \Delta n_{TM}$ Gültigkeit hat, wobei $\Delta n_{TE}$ und $\Delta n_{TM}$ transversale Brechungsindexvariationen im Substrat gemäß den beiden Wellenmoden TE und TM sind.

2. Vorrichtung nach Anspruch 1, dadurch gekennzeichnet, daß das Substrat (13) aus Lithiumniobat besteht und eine Achse c besitzt, die den außerordentlichen Index trägt, wobei der Wellenleiter durch örtliche Titandiffusion erhalten ist.

3. Vorrichtung nach Anspruch 2, dadurch gekennzeichnet, daß das Substrat (13) so ausgerichtet ist, daß seine Achse c parallel zu den in den Wellenleitern erzeugten elektrischen Feldern verläuft.

4. Vorrichtung nach Anspruch 1, dadurch gekennzeichnet, daß das Substrat (13) aus Lithiumtantalat besteht.

5. Vorrichtung nach Anspruch 1, dadurch gekennzeichnet, daß das Substrat (13) aus Galliumarsenid besteht.

6. Integrierte optische Amplitudenmodulationsvorrichtung, die ein Interferometer mit zwei Armen aufweist, welche an einen eine einfallende optische Strahlung empfangenden Eingangswellenleiter angeschlossen sind, wobei die in diesen beiden Armen übertragenen Strahlungsanteile sich am Ausgang des Interferometers in einem Ausgangswellenleiter vereinen und die Stärke der austretenden Strahlung von der Phasenverschiebung abhängt, die vom modulierenden elektrischen Feld, das an mindestens einen der Arme angelegt wird, bewirkt wurde, dadurch gekennzeichnet, daß mindestens einer der Arme eine integrierte optische Phasenmodulationsvorrichtung nach einem beliebigen der Ansprüche 1 bis 5 enthält.

# 0 099 282

## Claims

1. An integrated optical phase modulator device comprising, on the surface of a flat substrate (13) possessing electro-optical properties, at least one waveguide produced by the creation of a zone (7) in which the refractive index is greater than that of the substrate, a first TE guided mode and a second TM guided mode being transmitted in this waveguide (7) at depths of h and h' with respect to the surface of the substrate (13), and a set of electrodes disposed on either side of that waveguide (7) in order to generate electric fields perpendicular to the direction of the waveguide (7), these electrodes being able to partially cover this waveguide (7), this set of electrodes making it possible to adjust the phase shift of the TE and TM guided modes in such a manner that the phase shifts of these two modes are equal, these TE and TM modes having radii $W'y$ and $Wy$, and $W'z$ and $Wz$ along two perpendicular axes in a plane orthogonal to the direction of the waveguide (7), one of these axes being parallel to the surface of the substrate (13), characterized in that this set of electrodes comprises a single pair of two rectangular electrodes ($E_8$, $E_9$) of a width b, these electrodes being parallel to each other and disposed at the surface of the substrate symmetrically with respect to an axis $\Delta'$ of a direction parallel to that of the waveguide (7), and a distance 2a apart from each other, the two transmitted TE and TM modes having their axes of symmetry $\Delta_1$ and $\Delta_2$ whose projections of the surface of the substrate (13) are respectively at distances $c'$ and $c$ from the axis $\Delta'$, and that the quantities a, b, c, c', h, h', Wy, W'y, Wz and W'z are such that the relationship $\Delta n_{TE} = \Delta n_{TM}$ is true, $\Delta n_{TE}$ and $\Delta n_{TM}$ being the transversal index variations in the substrate corresponding to the two guided TE and TM modes.

2. A device according to claim 1, characterized in that the substrate (13) is made of lithium niobate having an axis c which carries the extraordinary index, the waveguide being obtained by localized diffusion of titanium.

3. A divice according to claim 2, characterized in that the substrate (13) is oriented in such a way that its axis c is parallel to the electric field created in the guides.

4. A device according to claim 1, characterized in that the substrate (13) is made of lithium tantalate.

5. A device according to claim 1, characterized in that the substrate (13) is made of gallium arsenide.

6. An integrated optical amplitude modulator device comprising an interferometer with two arms connected to an input guide receiving an incident optical radiation, the radiation fractions propagated in these two arms combining at the interferometer output in an output guide, the intensity of the emerging radiation being a function of the phase shift introduced by a modulating electric field applied to at least one of the arms, characterized in that at least one of the arms comprises an integrated optical phase modulator device according to any one of the claims 1 to 5.

7

# FIG.1

# FIG.2

# FIG.3

$I_S$
$I_{SM}$

$-\pi$
$-V_\pi$

$0$

$\pi/2$
$V_{\pi/2}$

$\pi$
$V_\pi$

$\Delta\phi'$
$V$

# FIG.4

$E_5$

$E_7$

$V$

$V'$

$5$

$E_4$

$E_6$

# FIG.5

# FIG.6